# NEUE EUROPÄISCHE PATENTSCHRIFT

(11) **EP 2 100 495 B2**
(45) Veröffentlichungstag und Bekanntmachung des Hinweises auf die Entscheidung über den Einspruch: **22.10.2014**
(45) Hinweis auf die Patenterteilung: 29.06.2011
(21) Anmeldenummer: 08171431.3
(22) Anmeldetag: 12.12.2008
(51) Int. Cl.: A01D 43/073, A01D 43/08

(54) **Landwirtschaftliche Erntemaschine mit einer Überladeeinrichtung**
Agricultural harvester with a transfer device
Moissonneuse agricole dotée d'une goulotte de transbordement

(30) Priorität: 13.03.2008 DE 102008014001
(43) Veröffentlichungstag der Anmeldung: 16.09.2009
(73) Patentinhaber: CLAAS Selbstfahrende Erntemaschinen GmbH, 33428 Harsewinkel (DE)
(72) Erfinder: Pollklas, Manfred, 33378, Rheda-Wiedenbrück (DE); Hartmann, Ralf, 49324, Melle (DE)

(56) Entgegenhaltungen:
- EP-A1- 0 760 202
- EP-A1- 1 380 202
- EP-A1- 1 405 555
- EP-A1- 1 927 277
- EP-A1- 1 977 640
- EP-A1- 2 020 174
- DE-A1- 10 021 664
- DE-A1- 19 848 127
- US-A1- 2002 083 695

## Beschreibung

Die Erfindung betrifft eine landwirtschaftliche Erntemaschine mit einer Überladeeinrichtung zum Überladen von Erntegut auf eine Transportvorrichtung gemäß dem Oberbegriff des Patentanspruchs 1.

Selbstfahrende Erntemaschinen wie beispielsweise Feldhäcksler oder Mähdrescher weisen üblicherweise eine Überladeeinrichtung auf, mit der das geerntete Erntegut auf ein Transportfahrzeug oder in einem Speicherbehälter übergeben wird. Bei einem Feldhäcksler wird beispielsweise das Erntegut während des Ernteprozesses permanent über die Überladeeinrichtung an ein nebenher fahrendes Transportfahrzeug überladen, Hierzu muss das Transportfahrzeug parallel zu oder neben dem Feldhäcksler her fahren. Der Bediener des Feldhäckslers hat dabei stets die Position des Transportfahrzeuges zum Feldhäcksler zu kontrollieren, um eine exakte und verlustfreie Erntegutübergabe zu gewährleisten. Im einfachsten Fall wird die Position der Überladeeinrichtung selbst bzw, die am Ende der Überladeeinrichtung angeordnete Überladeklappe manuell durch den Bediener der Erntemaschine gesteuert. Beim Herausfahren der Erntmaschine aus dem Erntegutbestand, insbesondere im Vorgewende, wird die Erntemaschine beschleunigt und steuert in der Regel vom nebenherfahrenden Transportfahrzeug weg, um nach einem vollzogenem Wendemanöver erneut in den Erntegutbestand hineinfahren zu können. Mit Erreichen des Vorgewendes beschleunigt der SFH in der Regel früher als das nebenherfahrende Transportfahrzeug. Hierbei wird dann bei einer zunächst gleichbleibenden Fahrgeschwindigkeit des Transportfahrzeuges in der Beschleunigungsphase der Erntemaschine, aufgrund der damit einhergehenden Positionsänderung der Überladeeinrichtung zum Transportfahrzeug, das noch innerhalb der Erntemaschine vorhandene Resterntegut nicht mehr in den Speicherbehälter des Transportfahrzeuges, sondern auf den Feldboden überladen, so dass über den gesamten Erntebetrieb gesehen, ein nicht zu vernachlässigender Erntegutverlust eintritt. Ein vergleichbares Problem ist beim Durchfahren von Bestandslücken vorhanden, wobei in dieser Erntesituation vom Bediener der Erntemaschine während einer kurzen Beschleunigungsphase die Fahrgeschwindigkeit der Erntemaschine über eine vorab festgelegte Erntesollfahrgeschwindigkeit hinaus erhöht wird, bis die Bestandslücke durchfahren ist, um im Erntegutbestand mit Erntesollfahrgeschwindigkeit weiterzufahren. Durch die Beschleunigung der Fahrgeschwindigkeit der Erntemaschine verändert sich gleichfalls die Position der Überladeeinrichtung zum Transportfahrzeug, dadurch bedingt, dass der Bediener des Transportfahrzeuges zeitverzögert die Beschleunigung der Erntemaschine wahrnimmt, so dass auch in dieser Erntesituation das noch zu überladene Resterntegut gleichfalls auf den Feldboden oder im ungünstigsten Fall auf das Transportfahrzeug selbst überladen wird.

Die EP 1 454 520 A1 offenbart eine Vorrichtung zur Steuerung der Überladeeinrichtung an einer landwirtschaftlichen Erntemaschine, die zur besseren Übergabe des Erntegutes an ein Transportfahrzeug die Verstellung der Position der Überladeeinrichtung in Abhängigkeit von der Position eines ersten Aktors zu der Position eines zweiten Aktors, wobei die Stellung des Aktors die Stellung der Überladeeinrichtung bestimmt, vornimmt. Nachteilig an dieser Ausführung der Steuerung ist, dass der Bediener, insbesondere beim Verlassen des Erntegutbestandes, insbesondere bei Fahrten im Vorgewende, weiterhin die Steuerung der Überladeeinrichtung und eine Abstimmung zu dem nebenher- oder hinterherfahrenden Transportfahrzeug vornehmen muss, damit eine verlustfreie Erntegutübergabe erfolgen kann. Da der Bediener der Erntemaschine sich jedoch gerade bei der Fahrt aus dem Erntegutbestand heraus auf das Manövrieren der Erntemaschine konzentrieren muss, wird größtenteils Erntegut neben dem Transportfahrzeug vorbei gefördert und bleibt als Verlust auf dem Feld liegen.

Aus der DE 198 48 127 A1 ist eine Steuerung für die schwenkbare Überladevorrichtung eines Feldhäckslers bekannt. Zum sicheren Treffen eines vom Feldhäcksler gezogenen Transportanhängers oder eines hinter dem Feldhäcksler herfahrenden Transportfahrzeugs ist darin vorgesehen, den Schwenkwinkel der Überladeeinrichtung anhand einer die Fahrtrichtung des Feldhäckslers vorgebenden Größe zu steuern. Dies kann beispielsweise der Knickwinkel (bei einer knickgelenkten Maschine) oder der Lenkeinschlag sein. Mit der Situation der Beschleunigung des Feldhäckslers beim Erreichen des Vorgewendes und damit verbundenen Überladeschwierigkeiten auf ein neben dem Feldhäcksler fahrendes Transportfahrzeug befasst sich die DE 198 48 127 A1 jedoch nicht.

Es ist eine Aufgabe der vorliegenden Erfindung, die Nachteile des zitierten Standes der Technik zu vermeiden und den Überladeprozess der Erntemaschine in Erntesituationen bei der Fahrt im Vorgewende verlustfrei zu ermöglichen.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

Indem die Überladeeinrichtung einer sich im Erntebetrieb befindenden landwirtschaftlichen Erntemaschine in Form eines Feldhäckslers in Abhängigkeit von Betriebskriterien manuell und/oder automatisch entgegen die Fahrtrichtung der Erntemaschine verschwenkbar ist und der Vorgang zum Verschwenken der Überladeeinrichtung in ein elektronisches Vorgewende-Management-System integriert ist, welches das Verschwenken und/oder ein Einstellen der Verschwenkgeschwindigkeit der Überladeeinrichtung im laufenden Überladeprozess bewirkt, wird sichergestellt, dass die bei Fahrt im Vorgewende, auftretende Veränderung der Überladeposition, die insbesondere durch das frühere Beschleunigen der Erntemaschine gegenüber dem Transportfahrzeug eintritt, kompensiert wird, so dass die üblicherweise auftretenden Überladeverluste vermieden werden. Im Weiteren ist kein Einsatz von kostenaufwendiger Sensorik zur Steuerung der Überladeeinrichtung nötig, um solchen Überladeverlusten entgegenzuwirken.

Dadurch, dass die Betriebskriterien, in deren Abhängigkeit das Verschwenken der Überladeeinrichtung bzw. die Einstellung der Verschwenkgeschwindigkeit erfolgt, die Fahrgeschwindigkeit und/oder die Beschleunigung der Erntemaschine und/oder die Erntegutdurchsatzmenge und/oder der Lenkwinkel der Erntemaschine und/oder die Änderung der Relativgeschwindigkeit zwischen der Erntemaschine und dem Transportfahrzeug sind, lassen sich durch dessen Berücksichtigung Rückschlüsse auf Erntesituationen ableiten, in denen es zu einer gegenüber dem normalen Erntebetrieb veränderten Überladeposition kommen kann, wenn die Erntemaschine im Erntebetrieb das Vorgewende erreicht, wobei in diesen Erntesituationen die Erntemaschine in der Regel beschleunigt wird und eine vorab definierte Erntesollfahrgeschwindigkeit überschreitet, welches vom Bediener des Transportfahrzeuges zeitverzögert wahrgenommen wird. Die Berücksichtung der Erntegutdurchsatzmenge lässt gleichermaßen Rückschlüsse auf die beschriebenen Erntesituation zu, da insbesondere beim Erreichen des Vorgewendes der Erntegutdurchsatz abnimmt. Im Weiteren wird mit dem Erreichen des Vorgewendes in der Regel die Erntemaschine vom Transportfahrzeug weggesteuert, um ein Wendemanöver einleiten zu können, so dass vorteilhaft auch der eingeschlagene Lenkwinkel der Erntemaschine als Betriebskriterium dienen kann.

In einer vorteilhaften Weiterbildung der Erfindung umfasst die Erntemaschine eine Auswerte- und Steuereinrichtung zur Steuerung der Überladeeinrichtung, wobei über die Auswerte- und Steuereinrichtung der Verschwenkvorgang bzw. das Steuern/Regeln der Verschwenkgeschwindigkeit der Überladeeinrichtung entgegen der Fahrtrichtung in Abhängigkeit von den Betriebskriterien automatisch vorgenommen wird, wobei eine manuelle Steuerung durch den Bediener denkbar wäre, damit dieser schnell und individuell je nach Einschätzung der jeweiligen Erntesituation den Verschwenkvorgang entgegen der Fahrtrichtung zur Vermeidung von Überladeverlusten steuern und regeln kann.

Um die Betriebskriterien ermitteln zu können, umfasst die landwirtschaftliche Erntemaschine geeignete Mittel, die als Sensoren ausgebildet sein können, die Signale bereitstellen, um in deren Abhängigkeit solche Erntesituationen erkennen zu können, in denen es aufgrund einer Veränderung der Überladeposition der Erntemaschine zur Transportvorrichtung des nebenherfahrenden Transportfahrzeug zu Überladeverlusten kommen kann.

Denkbar ist, dass das Mittel zur Ermittlung der Betriebskriterien eine an der Erntemaschine angeordnete elektrooptische Einrichtung ist, die insbesondere als eine Kamera ausgebildet sein kann, so dass beispielhaft die Veränderung der relativen Position der Erntemaschine zum Transportfahrzeug auf einfache Weise ermittelbar ist.

In einer vorteilhaften Weiterbildung der Erfindung weist die Auswerte- und Steuereinheit Steuermittel auf, die eine Steuerung der Überladeeinrichtung in Abhängigkeit von den bereitgestellten Signalen derart ermöglicht, so dass sichergestellt ist, dass ein vor dem Verschwenken eingestellter Auftreffpunkt des Erntegutstromes auf den Transportbehälter des nebenherfahrenden Transportfahrzeuges im Wesentlichen konstant bleibt.

Eine effektive Vermeidung von Überladeverlusten in den beschriebenen Erntesituationen durch das Verschwenken der Überladeeinrichtung entgegen der Fahrtrichtung ist dann sichergestellt, wenn bei einer in der Regel eingenommenen seitlichen Überladeposition der Überladeeinrichtung zeitgleich mit Beginn der Beschleunigungsphase der Erntemaschine, die oberhalb der vorab definierten Erntesollfahrtgeschwindigkeit liegt, entsprechende vom Sensor zur Ermittlung der Erntefahrgeschwindigkeit erzeugten Signale an die Auswerte- und Steuereinrichtung übermittelt und das Verschwenken der Überladeeinrichtung entgegen der Fahrtrichtung in Abhängigkeit von den Signalen von der Auswerte- und Steuereinrichtung gesteuert wird.

Besonders praktisch erweist es sich, das Vorgewende-Management-System bei Sensieren einer Beschleunigung der Erntemaschine während der Fahrt im Vorgewende über eine vorab definierte ErnteSollfahrgeschwindigkeit zu aktivieren, so dass der Verschwenkvorgang insgesamt automatisiert werden kann und der Bediener eine erhebliche Entlastung erfährt und Überladeverluste vermeidbar sind .

Damit die Erntemaschine möglichst schnell wieder eine vorab definierte, dem normalen Erntebetrieb entsprechende Überladeposition einnehmen kann, wird der Verschwenkvorgang der Überladeeinrichtung entgegen der Fahrtrichtung gestoppt, wenn die Erntegutbeförderung beendet ist.

Als besonders praxistauglich und bedienerfreundlich erweist es sich, wenn die Auswerte- und Steuereinrichtung über eine Tastvorrichtung in der Kabine der Erntemaschine aktivierbar ist und die aktivierte Steuerung mittels einer optischen und/oder akustischen Meldevorrichtung in der Kabine der Erntemaschine anzeigbar ist, so dass der Bediener über den Verschwenkvorgang permanent informiert bleibt und gegebenenfalls manuell in den Verschwenkvorgang und das Steuern der Verschwenkgeschwindigkeit eingreifen kann.

Weitere vorteilhafte Ausgestaltungen sind Gegenstand weiterer Unteransprüche und werden nachfolgend anhand von Zeichnungen näher erläutert.

Es zeigen:
- Figur 1:: eine Draufsicht auf einen Feldhäcksler mit einem nebenherfahrenden Schlepper mit adaptierter Transportvorrichtung während der Fahrt im Vorgewende
- Figur 2:: eine Draufsicht auf einen nicht unter den Anspruch 1 fallenden Feldhäcksler mit einem nebenherfahrenden Schlepper mit adaptierter Transportvorrichtung während des Durchfahrens einer Bestandslücke auf dem Bearbeitungsfeld

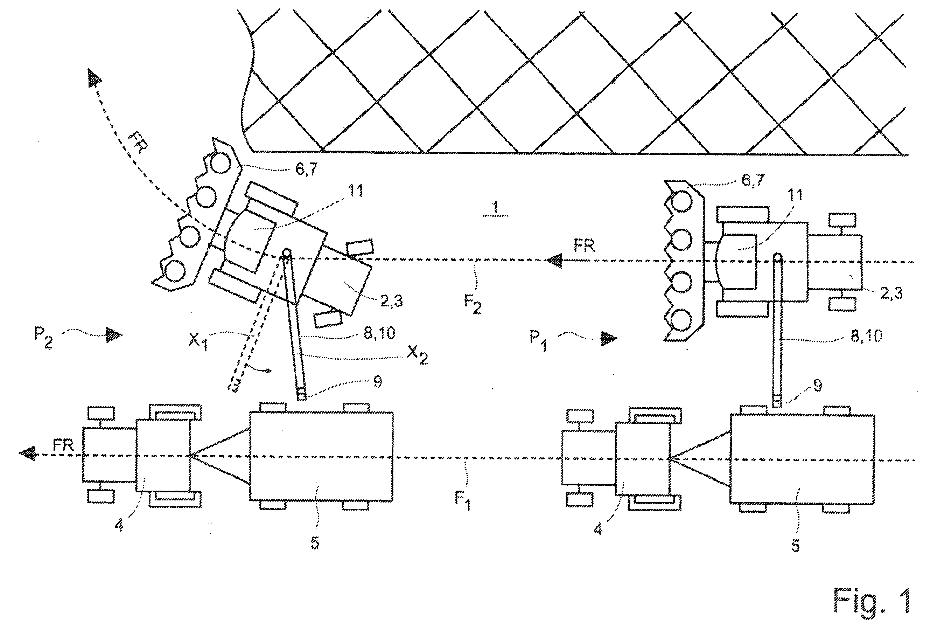

In der Figur 1 ist eine Draufsicht auf ein Bearbeitungsfeld 1 gezeigt, auf welchem sich eine als Feldhäcksler 2 ausgeführte landwirtschaftliche Erntemaschine 3 und ein Transportfahrzeug 4 mit angehängter Transportvorrichtung 5 im Ernteprozess befinden. Fronseitig ist dem Feldhäcksler 2 ein Vorsatzgerät 6, im Ausführungsbeispiel ein Maisgebiss 7 zugeordnet, welches das Erntegut auf dem Bearbeitungsfeld 1 schneidet, aufnimmt und weiteren nicht dargestellten Bearbeitungsorganen zuführt. Das zerkleinerte Erntegut wird dann über den seitlich verschwenkbaren und in der Höhe verstellbaren Auswurfkrümmer 8 an die vom nebenherfahrenden Transpotfahrzeug 4 gezogene Transportvorrichtung 5 überladen. Mittels der Stellung der dem Auswurfkrümmer 8 endseitig zugeordneten Auswurfklappe 9 kann die Wurfweite, d.h. der Abstand zwischen dem am Feldhäcksler 1 befindlichen, eingangsseitigen Ende des Auswurfkrümmers 8 und dem Auftreffpunkt des Gutstroms auf der Transportvorrichtung 5 des Transportfahrzeuges 4, gesteuert werden. Wird die Auswurfklappe 9 nach unten geschwenkt, so ist die Wurfweite bei gleichbleibender Höheneinstellung des Auswurfkrümmers 8 geringer als bei einer nach oben geschwenkten Auswurfklappe 9. Die relative Stellung der als Auswurfkrümmer 8 ausgebildeten Überladeeinrichtung 10 zur Fahrzeuglängsachse wird durch einen geeigneten Sensor, beispielhaft einen Inkrementalgeber mit Drehrichtungserkennung, ermittelt und einer nicht gezeigten Auswerte- und Steuereinrichtung überführt. Das Verschwenken der Überladeeinrichtung 10 erfolgt beim Feldhäcksler 2 auf einfache Art durch einen Hydromotor, wobei der Einsatz anderer Stellmittel wie Elektromotoren oder Hydraulikzylinder vorstellbar ist. Es liegt im Rahmen der Erfindung, dass die Überladeeinrichtung 10 zur Realisierung großer Überladeweiten auch teleskopierbar ausgeführt sein kann.

Der Feldhäcksler 2 befindet sich in der ersten dargestellten Erntesituation P₁, in Geradeausfahrt beim Aufnehmen von Erntegut vom Bearbeitungsfeld 1. Die Erntefahrgeschwindigkeit bzw. der zurückgelegte Weg der Erntemaschine 3 wird von einem nicht dargestellten Sensor gemessen. Die Überladeeinrichtung 10, hier der Auswurfkrümmer 8, ist im Ausführungsbeispiel so ausgerichtet, dass er nahezu einen 90° Winkel zur Fahrzeugslängsachse des Feldhäckslers 2 einnimmt, um das Erntegut auf die vom Transportfahrzeug 4 gezogene Transportvorrichtung 5 zu überladen. Das Transportfahrzeug 4 mit der angehängten Transportvorrichtung 5 bewegt sich auf einer Fahrspur F₁, welche sich parallel zur Fahrspur F₂ des Feldhäckslers 2 erstreckt und wird zu diesem in einer nahezu konstanten Überladeposition geführt. Die zweite Erntesituation P₂ zeigt nun den Feldhäcksler 2 und das nebenherfahrende Transportfahrzeug 4 mit angehängter Transportvorrichtung 5 bei der Fahrt im Vorgewende. Mit Erreichen des Vorgewendes wird die Erntemaschine 3 zur Einleitung eines Wendemanövers in der Regel vom Bediener beschleunigt und das Vorsatzgerät 6 von einer Arbeits- in eine Nichtarbeitsposition (nicht dargestellt) verbracht. Dadurch, dass der Bediener des nebenherfahrenden Transportfahrzeuges 4 erst zeitverzögert das Beschleunigen und/oder das Verlassen der vorab eingenommenen Fahrspur F₂ der Erntemaschine 3 wahrnimmt, verändert sich der im Erntebetrieb eingenommene Überladeabstand zwischen dem Transportfahrzeug 4 und der Erntemaschine 3. Da es für den Bediener der Erntemaschine 3 sehr schwer ist, neben der Durchführung des Wendemanövers gleichzeitig die Konzentration auf dem im Vorgewende stattfindenden Überladevorgang des in der Erntemaschine, 3 vorhandenen Resterntegutes zu fokussieren, verharrt in der Regel die Überladeeinrichtung 10 während der Fahrt im Vorgewende in der während der Parallelfahrt des Erntebetriebes eingenommen, hier strichpunktiert dargestellten Position X₁-Aufgrund des sich verändernden Abstandes der Erntemaschine 3 zum Transportfahrzeug 4, kommt es dann zu unerwünschten Überladeverlusten, dadurch, dass das noch in der Erntemaschine 3 vorhandene Resterntegut neben die Transportvorrichtung 5 auf den Feldboden oder im ungünstigsten Fall direkt auf das die Transportvorrichtung 5 ziehende Transportfahrzeug 4 überladen wird. Denkbar ist zudem, dass der Bediener des Transportfahrzeuges 4, dieses mit Erreichen des Vorgewendes kurzfristig abbremst, so dass gleichfalls eine Veränderung der Überladeposition eintritt.

Um diesem Nachteil zu entgehen, erfolgt nun erfindungsgemäß bei einer sich im Erntebetrieb befindenden Erntemaschine 3 ein Verschwenken der Überladeeinrichtung 10 entgegen der Fahrtrichtung FR in Abhängigkeit von Betriebskriterien der Erntemaschine 3. In einer nicht gezeigten der Erntemaschine 3 zugeordneten Auswerte- und Steuereinrichtung wird zur Berechnung der an die Stellmittel zum Verschwenken der Überladeeinrichtung 10 entgegen der Fahrtrichtung FR abgegebenen Ansteuerungssignale wenigstens die Erntesollfahrgeschwindigkeit vorab definiert. Weitere Betriebskriterien der Erntemaschine, wie der Lenkwinkels der Erntemaschine 3 und/oder die Stellung des Vorsatzgerätes im Erntebetrieb und/oder die Relativgeschwindigkeit zwischen der Erntemaschine 3 und dem Transportfahrzeug 4 und/oder eine vorab festegelegle Überladeposition können zusätzlich in der Auswerte- und Steuereinrichtung hinterlegt sein. Dies erfolgt in der Regel manuell vom Bediener über geeignete in der Fahrerkabine 11 vorgesehene Eingabemittel.

Entsprechend von nicht näher dargestellten Sensoren empfängt die Auswerte- und Steuereinrichtung nun Signale von entsprechenden Sensoren, u.a. von der aktuellen Erntefahrgeschwindigkeit, der Stellung des Vorsatzgerätes und dem eingestellten Lenkwinkel der Erntemaschine. Wird nun festgestellt, dass die Ist-Erntefahrgeschwindigkeit die vorab definierte Erntesollfahrgeschwindigkeit überschreitet, wird von einem in der Auswerte- und Steuereinrichtung hinterlegten Programm ein Ausgangssignal generiert und an das Stellmittel zum Verschwenken der Überladeeinrichtung 10 übermittelt, die dann eine Positionssteuerung der Überladeeinrichtung 10 entgegen der Fahrtrichtung FR bewirkt. Die Verschwenkgeschwindigkeit mit der das Verschwenken der Überladeeinrichtung 10 entgegen der Fahrtrichtung FR erfolgt, hängt dabei von der Höhe des Beschleunigungswertes der Erntemaschine 3 in der Beschleunigungsphase oberhalb der Erntesollfahrgeschwindigkeit ab, so dass in der Erntesituation P₂ die durch den Beschleunigungsvorgang eintretende Abstandsveränderung der Erntemaschine 3 zum Transportfahrzeug 4 ausgeglichen wird und das Überladen des in der Erntemaschine 3 vorhandenen Resterntegutes sichergestellt ist. Sollte das Überladen des in der Erntemaschine 3 vorhandenen Resterntegutes beendet sein, wird dies anhand wenigstens eines im Erntegutkanal angeordneten Sensors ermittelt. Ein entsprechendes Signal wird an die Auswerte- und Steuereinrichtung übermittelt und vom hinterlegten Programm ausgewertet, so dass dann entsprechende Signale zum Beenden des Verschwenkvorgangs an die Stellmittel der Überladeeinrichtung 10 ausgegeben werden. In einer Ausgestaltung kann die Positionssteuerung der Überladeeinrichtung 10 entgegen der Fahrtrichtung FR so beschaffen sein, dass neben der Berücksichtigung der Erntefahrgeschwindigkeit bzw. der Beschleunigung der Lenkvorgang durch Berücksichtung des Lenkwinkels von der Auswerte- und Steuereinrichtung bei der Steuerung der Überladeeinrichtung 10 entgegen der Fahrtrichtung der Erntemaschine 3 berücksichtigt wird, so dass die zusätzlich eintretende Quer-Abstandsveränderung zwischen Erntemaschine 3 und Transportfahrzeug 4 durch entsprechendes Steuern der Überladeeinrichtung ausgleichbar ist. Überdies können weitere bereits genannte Betriebsparameter der Erntemaschine 3, wie beispielhaft eine vorab eingestellte Zielposition des Erntegutstromes auf die Transportvorrichtung 5, wie auch die Relativgeschwindigkeit der Erntemaschine 3 zum Transportfahrzeug zur Steuerung des Verschwenkvorgangs der Überladeeinrichtung entgegen die Fahrtrichtung genutzt werden, indem Abweichungen von vorab definierten Werten für die Betriebskriterien, die gegenüber dem normalen Erntebetrieb auf eine Veränderung der Überladeposition der Erntemaschine zum Transportfahrzeug schließen lassen, berücksichtigt werden.
Im weiferen ist es möglich, dass der Erntemaschine eine nicht näher dargestellte elektrooptische Einrichtung, zugeordnet und dabei so positioniert ist, dass sie in Gutaustragrichtung der Überladeeinrichtung 10 nachgeordnet ist und aus einem obenseitigen Bereich den Erntegutstrom und die Transportvorrichtung 5 zumindest teilweise erfasst. Dabei kann die elektrooptische Einrichtung an beliebiger Position der Überladeeinrichtung 10 positioniert sein. Die elektrooptische Einrichtung ist entweder leitungsbasiert oder drahtlos mit der Auswerte- und Steuereinrichtung gekoppelt. Im Fall, dass nun das Transportfahrzeug 4 seine Geschwindigkeit verringert oder durch Verlassen der Fahrspur F1 seine Position zur Erntemaschine 3 verändert, kann dies durch die elektrooptische Einrichtung erfasst und ein entsprechendes Signal an die Auswerte- und Steuereinrichtung weitegeleitet werden, so dass ein entsprechendes Ausgangssignal an das Stellmittel zum Verschwenken der Überladeeinrichtung 10 entgegen der Fahrtrichtung FR erfolgt, um die von der elektrooptischen Einrichtung erfasste Abstandsveränderung zwischen Erntemaschine 3 und Transportfahrzeug 4 bzw. Transportvorrichtung 5 auszugleichen, so dass ein verlustfreier Überladevorgang ermöglicht wird.

In einer weiteren Ausgestaltung ist vorgesehen, dass dem Bediener der Erntemaschine 3 über eine optische Anzeige in der Fahrerkabine 17 anzeigbar ist, dass kein Resterntegut mehr in der Erntemaschine 3 vorhanden ist, so dass der Verschwenkvorgang vom Bediener manuell über geeignete Mittel, wie beispielhaft einen Taster in der Fahrerkabine 11, beendbar ist.

In einer weiteren Ausführungsform ist der Verschwenkvorgang zum Verschwenken der Überladeeinrichtung 10 entgegen der Fahrtrichtung FR der Erntemaschine 3 in ein hier nicht dargestelltes an sich bekanntes elektronisches Vorgewende-Management-System integrierbar, mit dem sich die Vorgewende-Arbeitsschrittsequenzen automatisch steuern lassen, wobei üblicherweise verschiedene Vorgewende-Arbeitsschrittsequenzen eingelernt werden, indem der Bediener das Vorgewende-Management-System in ein Lernmodus schaltet und dann ein Wendemanöver durchführt und die einzelnen Arbeitsschritte vom Vorgewende-Management-System erfasst und gespeichert werden. Erfindungsgemäß werden nun die bereits genannten Betriebskriterien der Erntemaschine 3 vom elektronischen Vorgewende-Management-System berücksichtigt, so dass insbesondere das Verschwenken der Überladeeinrichtung 10 entgegen der Fahrtrichtung FR dann aktiviert wird, wenn vom Vorgewende-Management-System Abweichungen von den vorab festgelegten Werten der Betriebskriterien , wie z.B. das Überschreiten der Erntesollfahrgeschwindigkeit festgestellt werden, die eine Veränderung des Abstandes der Erntemaschine 3 zum Transportfahrzeug 4 bedeuten. Wird mittels Sensoren festgestellt, dass kein Erntegut mehr befördert wird, wird dies ebenfalls vom Vorgewende-Management-System berücksichtigt und der Verschwenkvorgang automatisch beendet, so dass die Überladeeinrichtung 10 in ihre ursprüngliche Überladeposition X₁ zurückverschwenkt werden kann, um nach dem Wendmanöver im Vorgewende wieder in Parallelfahrt zum Transportfahrzeug 4 den Ernteprozess fortzuführen.

Im Weiteren kann es vorgesehen sein, dass die Auswerte- und Steuereinrichtung über eine Tastvorrichtung in der Fahrerkabine 11 der Erntemaschine 3 aktivierbar ist und die aktivierte Steuerung mittels einer optischen und/oder akustischen Meldevorrichtung in der Fahrerkabine 11 der Erntemaschine 3 anzeigbar ist, so dass der Bediener über den Verschwenkvorgang permanent informiert bleibt und gegebenenfalls manuell in den Verschwenkvorgang und das Steuern der Verschwenkgeschwindigkeit eingreifen kann.

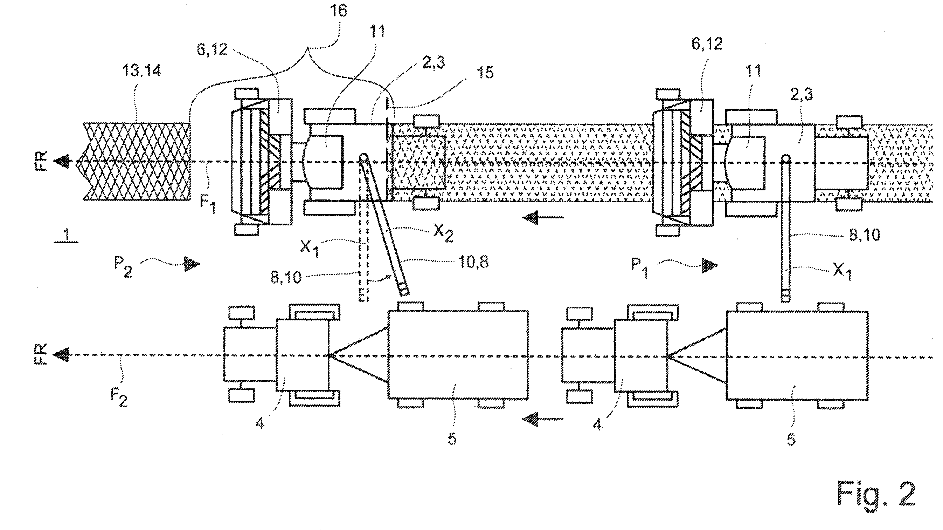

Figur 2 zeigt wie Figur 1 eine Draufsicht auf ein Bearbeitungsfeld 1, auf welchem sich eine als Feldhäcksler 2 ausgeführte landwirtschaftliche Erntemaschine 3 und ein Transportfahrzeug 4 mit angehängter Transportvorrichtung 5 im Ernteprozess befinden. Fronseitig ist dem Feldhäcksler 2 nun in Abänderung zu Figur 1 ein Vorsatzgerät 6 in Form einer Pickup 12 zugeordnet. In der ersten dargestellten Erntesituation P₁ bewegt sich die Erntemaschine 3 auf einer Fahrspur F₁ parallel zur Fahrspur F₂ in gleicher Fahrtrichtung FR des Transportfahrzeuges 4 und wird zu diesem in einer Überladeposition geführt. Die Fahrspur F₁ des Feldhäckslers 2 wird von der Lage des als Schwaden 13 abgelegten Erntegutes 14 bestimmt. Das vom Feldhäcksler 2 mittels der Pickup 12 vom Bearbeitungsfeld 1 aufgenommene Erntegut 13 wird weiteren nicht dargestellten Bearbeitungsorganen des Feldhäckslers 2 zugeführt und mittels der als Auswurfkrümmer 8 ausgeführten Überladeeinrichtung 10 auf die vom Transportfahrzeug 4 gezogene Transportvorrichtung 5 überladen, Dabei nimmt die Überladeeinrichtung 10 eine nahezu rechtwinklige Überladeposition X₁ zur Fahrzeuglängsachse ein. Momentan befindet sich der Feldhäcksler 2 beim Durchfahren einer ab der strichpunktiert dargestellten Linie 15 beginnenden Bestandslücke 16 des als Schwaden 13 abgelegten Erntegutes 14. Gleichfalls, wie während der in Figur 1 dargestellten Fahrt im Vorgewende, wird die Erntemaschine 3 mit dem Erreichen der Bestandslücke 16 in der Regel kurzfristig beschleunigt, um mit einer über der vorab festgelegten Erntesollfahrgeschwindigkeit liegenden Erntefahrgeschwindigkeit die Bestandslücke 16 durchfahren zu können, um sodann die Erntegutaufnahme vom Bearbeitungsfeld 1 nach einer kurzen Abbremsphase mit der vorab festgelegten Erntesollfahrgeschwindigkeit fortführen zu können. Auch in dieser zweiten dargestellten Erntesituation P₂ ist es für den Bediener der Erntemaschine 3 sehr schwer, neben dem Durchfahren der Bestandslücke 16 gleichzeitig die Konzentration auf den stattfindenden Überladevorgang des in der Erntemaschine 3 vorhandenen Resterntegutes zu fokussieren, so dass in der Regel die Überladeeinrichtung 10 während der Fahrt durch die Bestandslücke 15 in der vorab eingenommenen Überladeposition X₁, in der zweiten Erntesituation P₂ strichpunktiert dargestellt, beibehält. Mittels an sich bekannter und hier nicht näher dargestellter Sensoren empfängt die Auswerte- und Steuereinrichtung Signale über die Erntefahrgeschwindigkeit, die Stellung der Überladeeinrichtung 10, dem Lenkwinkels der Erntemaschine und des Erntegutdurchsatzes. Die erfassten Signale werden der Auswerte- und Steuereinrichtung zur Auswertung zugeleitet und vom in der Auswerte- und Steuereinheit hinterlegten Programm mit den vorab im Programm eingegebenen Werten errechnet. Wie bereits in Figur 1 beschrieben, lassen sich insbesondere anhand der genannten Signale differenzierte Rückschlüsse auf solche Erntesituation P₂ ableiten, wie das hier dargestellte Durchfahren von βestandslücken, in denen es zu Überladeverlusten kommen kann. Durch das in der Steuer- und Auswerteeinrichtung hinterlegten Programm werden die von den Sensoren empfangenen Signale ausgewertet und ein entsprechendes Signal generiert, das an das Stellmittel zum Verschwenken der Überladeeinrichtung 10 entgegen der Fahrtrichtung FR übermittelt wird. Wird die Erntemaschine 3 über die Erntesollfahrgeschwindigkeit hinaus beschleunigt, wird entsprechend des in der Beschleunigungsphase sensierten Beschleunigungswertes und des Lenkwinkels der Erntemaschine 3, welcher im dargestellten Ausführungsbeispiel unverändert bleibt, die gegenüber dem normalen Erntebetrieb voraussichtlich eintretende Abstandsveränderung zum Transportfahrzeug 4 berechnet. Ein von der Auswerte- und Steuereinrichtung entsprechend generiertes Signal wird an das Stellmittel zum Verschwenken der Überladeeinrichtung 10 entgegen der Fahrtrichtung FR übermittelt und verschwenkt die Überladeeinrichtung 10 entgegen die Fahrtrichtung FR in die hier liniert dargestellte Überladeposition X₂, um somit die eintretende Abstandsveränderung zu kompensieren und ein sicheres Überladen des Resterntegutes zu ermöglichen. Die Berechnung der Verschwenkgeschwindigkeit erfolgt dabei anhand des Beschleunigungswertes mit dem die Erntemaschine 10 über die Erntesollfahrgeschwindigkeit hinaus beschleunigt wird. Von der Auswerte- und Steuereinrichtung wird das Stoppen des Verschwenkvorgangs durch Ansteuerung des Stellmittels dann bewirkt, wenn von innerhalb der Erntemaschine angeordneten hier nicht dargestellten Sensoren festgestellt wird, dass kein Erntegut mehr befördert wird.

### Bezugszeichenliste:

- 1: Bearbeitungsfeld
- 2: Feldhäcksler
- 3: Landwirtschaftliche Erntemaschine
- 4: Transportfahrzeug
- 5: Transportvorrichtung
- 6: Vorsatzgerät
- 7: Maisgebiss
- 8: Auswurfkrümmer
- 9: Auswurfklappe
- 10: Überladeeinrichtung
- 11: Fahrerkabine
- 12: Pickup
- 13: Schwaden
- 14: Erntegut
- 15: strichpunktierte Linie
- 16: Bestandslücke

- FR: Fahrtrichtung
- P₁: Erntesituation
- P₂: Erntesituation
- F₁: Fahrspur
- F₂: Fahrspur

- X₁: Überladeposition
- X₂: Überladeposition

## Patentansprüche

1. Landwirtschaftliche Erntemaschine (2) zum Aufnehmen und Bearbeiten von Erntegut (14), in Form eines Feldhäckslers mit einer um eine horizontale und vertikale Achse verschwenkbaren Überladeeinrichtung (10) zum Überladen von Erntegut (14) auf ein Transportfahrzeug (4), wobei
die Überladeeinrichtung (10) der sich im Erntebetrieb befindenden Erntemaschine (3) in Abhängigkeit von Betriebskriterien der Erntemaschine (3) entgegen der Fahrtrichtung (FR) der Erntemaschine (3) manuell und/oder automatisch verschwenkt wird, **dadurch gekennzeichnet, dass** der Vorgang zum Verschwenken der Überladeeinrichtung (10) in ein elektronisches Vorgewende-Management-System integriert ist, welches das Verschwenken und/oder ein Einstellen der Verschwenkgeschwindigkeit der Überladeeinrichtung (10) bei laufenden Überladeprozess bewirkt.

2. Landwirtschaftliche Erntemaschine nach Anspruch 1,
**dadurch gekennzeichnet, dass**
die Betriebskriterien, in deren Abhängigkeit das Verschwenken und/oder das Einstellen der Verschwenkgeschwindigkeit der Überladeeinrichtung (10) erfolgt, die Erntefahrgeschwindigkeit bzw. die Beschleunigung der Erntemaschine (3) und/oder die Erntegutdurchsatzmenge und/oder der Lenkwinkel der Erntemaschine (3) und/oder die Änderung der Relativgeschwindigkeit zwischen der Erntemaschine (3) und dem Transportfahrzeug (4) sein können.

3. Landwirtschaftliche Erntemaschine nach Anspruch 1 oder 2,
**dadurch gekennzeichnet, dass**
eine Auswerte- und Steuereinrichtung zur Steuerung der Überladeeinrichtung (10) vorhanden ist, wobei die Auswerte- und Steuereinrichtung das Verschwenken der Überladeeinrichtung (10) entgegen der Fahrtrichtung (FR) der Erntemaschine (3) bzw. die Einstellung der Verschwenkgeschwindigkeit in Abhängigkeit von den Betriebskriterien steuert.

4. Landwirtschaftliche Erntemaschine nach wenigstens einem der vorhergehenden Ansprüche,
**dadurch gekennzeichnet, dass**
das Verschwenken der Überladeeinrichtung (10) entgegen der Fahrtrichtung (FR) bzw. die Einstellung der Verschwenkgeschwindigkeit automatisch von der Auswerte- und Steuereinrichtung übernommen wird .

5. Landwirtschaftliche Erntemaschine nach wenigstens einem der vorhergehenden Ansprüche,
**dadurch gekennzeichnet, dass**
die landwirtschaftliche Erntemaschine (3) geeignete Mittel zur Ermittlung der Betriebskriterien umfasst, wobei die Mittel als Sensoren ausgebildet sind, die Signale bereitstellen, in deren Abhängigkeit die Steuerung zum Verschwenken der Überladeeinrichtung (10) entgegen der Fahrtrichtung (FR) vornehmbar ist.

6. Landwirtschaftliche Erntemaschine nach wenigstens einem der vorhergehenden Ansprüche,
**dadurch gekennzeichnet, dass**
das Mittel zur Ermittlung der Betriebskriterien eine an der Erntemaschine angeordnete elektrooptische Einrichtung ist.

7. Landwirtschaftliche Erntemaschine nach wenigstens einem der vorhergehenden Ansprüche,
**dadurch gekennzeichnet, dass**
die Auswerte- und Steuereinrichtung Steuermittel aufweist, um beim Verschwenkvorgang der Überladeeinrichtung (10) entgegen der Fahrtrichtung (FR) der Erntemaschine (3), die Überladeeinrichtung (10) derart anzusteuern, dass ein vor dem Verschwenken eingestellter Auftreffpunkt des Erntegutstromes auf die Transportvorrichtung (5) des Transportfahrzeuges (4) im Wesentlichen konstant bleibt.

8. Landwirtschaftliche Erntemaschine nach wenigstens einem der vorhergehenden Ansprüche,
**dadurch gekennzeichnet, dass**
bei einer seitlichen Überladeposition (X₁) der Überladeeinrichtung (10) während des Beginns einer über einer Erntesollfahrgeschwindigkeit liegenden Beschleunigungsphase der Erntemaschine (3), die vom Sensor zur Ermittlung der Erntefahrgeschwindigkeit erzeugten Signale an die Auswerte- und Steuereinrichtung übermittelt und das Verschwenken der Überladeeinrichtung (10) entgegen der Fahrtrichtung (FR) in Abhängigkeit von den übermittelten Signalen gesteuert wird.

9. Landwirtschaftliche Erntemaschine nach wenigstens einem der vorhergehenden Ansprüche,
**dadurch gekennzeichnet, dass**
der Verschwenkvorgang gestoppt wird, wenn die Erntegutförderung beendet ist.

10. Landwirtschaftliche Erntemaschine nach wenigstens einem der vorhergehenden Ansprüche,
**dadurch gekennzeichnet, dass**
die Auswerte- und Steuereinrichtung zum Steuern des Verschwenkvorgangs der Überladeeinrichtung (10) über eine Tastvorrichtung aktivierbar ist und die aktivierte Steuerung mittels einer optischen und/oder akustischen Meldevorrichtung in der Fahrerkabine (11) der landwirtschaftlichen Erntemaschine (3) anzeigbar ist.

## Claims

1. An agricultural harvesting machine (2) for picking up and processing crop material (14) in the form of a forage harvester comprising a transfer device (10) pivotable about a horizontal and a vertical axis for transferring crop material (14) on to a transport vehicle (4), wherein the transfer device (10) of the harvesting machine (3) when in harvesting operation is pivoted manually and/or automatically in opposite relationship to the direction of travel (FR) of the harvesting machine (3) in dependence on operating criteria of the harvesting machine (3), **characterised in that** the process for pivoting the transfer device (10) is integrated into an electronic headland management system which causes the pivotal movement and/or setting of the pivotal speed of the transfer device (10) in an ongoing transfer process.

2. An agricultural harvesting machine according to claim 1 **characterised in that** the operating criteria in dependence on which the pivotal movement and/or setting of the pivotal speed of the transfer device (10) is effected can be the harvesting travel speed or the acceleration of the harvesting machine (3) and/or the crop material throughput amount and/or the steering angle of the harvesting machine (3) and/or the change in the relative speed between the harvesting machine (3) and the transport vehicle (4).

3. An agricultural harvesting machine according to claim 1 or claim 2 **characterised in that** there is an evaluation and control device for controlling the transfer device (10), wherein the evaluation and control device controls the pivotal movement of the transfer device (10) in opposite relationship to the direction of travel (FR) of the harvesting machine (3) or the setting of the pivotal speed in dependence on the operating criteria.

4. An agricultural harvesting machine according to at least one of the preceding claims **characterised in that** the pivotal movement of the transfer device (10) in opposite relationship to the direction of travel (FR) and setting of the pivotal speed is implemented automatically by the evaluation and control device.

5. An agricultural harvesting machine according to at least one of the preceding claims **characterised in that** the agricultural harvesting machine (3) includes suitable means for ascertaining the operating criteria, wherein the means are in the form of sensors providing signals, in dependence on which control for pivotal movement of the transfer device (10) in opposite relationship to the direction of travel (FR) can be effected.

6. An agricultural harvesting machine according to at least one of the preceding claims **characterised in that** the means for ascertaining the operating criteria is an electrooptical device arranged on the harvesting machine.

7. An agricultural harvesting machine according to at least one of the preceding claims **characterised in that** the evaluation and control device has control means to control the transfer device (10) in the pivotal movement of the transfer device (10) in opposite relationship to the direction of travel (FR) of the harvesting machine (3) in such a way that an impact point, set prior to the pivotal movement, of the crop material flow on to the transport apparatus (5) of the transport vehicle (4) remains substantially constant.

8. An agricultural harvesting machine according to at least one of the preceding claims **characterised in that** in the case of a lateral transfer position (X₁) of the transfer device (10) during the beginning of an acceleration phase of the harvesting machine (1), which is above the harvesting target travel speed, the signals produced by the sensor for ascertaining the harvesting travel speed are communicated to the evaluation and control device and the pivotal movement of the transfer device (10) in opposite relationship to the travel direction (FR) is controlled in dependence on the communicated signals.

9. An agricultural harvesting machine according to at least one of the preceding claims **characterised in that** the pivotal movement is stopped when the crop material conveying is concluded.

10. An agricultural harvesting machine according to at least one of the preceding claims **characterised in that** the evaluation and control device for controlling the pivotal movement of the transfer device (10) can be activated by way of a touch device and the activated control can be displayed by means of an optical and/or acoustic signalling device in the driving cab (11) of the agricultural harvesting machine (3).

## Revendications

1. Machine de récolte agricole (2) pour le ramassage et le traitement d'un produit de récolte (14), réalisée sous la forme d'une ensileuse, avec un dispositif de transbordement (10) pouvant pivoter autour d'un axe horizontal et vertical pour le transbordement du produit de récolte (14) sur un véhicule de transport (4), le dispositif de transbordement (10) de la machine de récolte agricole (3) se trouvant en mode de moissonnage étant pivoté manuellement et/ou automatiquement en fonction de critères de fonctionnement de la machine de récolte (3) dans le sens inverse de la marche (FR) de la machine de récolte (3), **caractérisée en ce que** le processus de pivotement du dispositif de transbordement (10) est intégré dans un système électronique de gestion des fourrières qui provoque le pivotement et/ou un réglage de la vitesse de pivotement du dispositif de transbordement (10) au cours du processus de pivotement.

2. Machine de récolte agricole selon la revendication 1, **caractérisée en ce que** les critères de fonctionnement, en fonction desquels le pivotement et/ou le réglage de la vitesse de pivotement du dispositif de transbordement (10) est effectué, peuvent être la vitesse de marche de la machine de récolte ou l'accélération de la machine de récolte (3) et/ou le débit de produit de récolte et/ou l'angle de braquage de la machine de récolte (3) et/ou la modification de la vitesse relative entre la machine de récolte (3) et le véhicule de transport (4).

3. Machine de récolte agricole selon la revendication 1 ou 2, **caractérisée en ce qu'**un dispositif d'évaluation et de commande est présent pour la commande du dispositif de transbordement (10), le dispositif d'évaluation et de commande commandant le pivotement du dispositif de transbordement (10) dans le sens inverse de la marche (FR) de la machine de récolte (3) ou le réglage de la vitesse de pivotement en fonction des critères de fonctionnement.

4. Machine de récolte agricole selon au moins l'une des revendications précédentes, **caractérisée en ce que** le pivotement du dispositif de transbordement (10) dans le sens inverse de la marche (FR) ou le réglage de la vitesse de pivotement est pris en charge automatiquement par le dispositif d'évaluation et de commande.

5. Machine de récolte agricole selon au moins l'une des revendications précédentes, **caractérisée en ce que** la machine de récolte agricole (3) comporte des moyens appropriés pour la détermination des critères de fonctionnement, les moyens étant réalisés sous la forme de capteurs qui fournissent des signaux en fonction desquels la commande de pivotement du dispositif de transbordement (10) dans le sens inverse de la marche (FR) peut être effectuée.

6. Machine de récolte agricole selon au moins l'une des revendications précédentes, **caractérisée en ce que** le moyen pour déterminer les critères de fonctionnement est un dispositif électro-optique disposé sur la machine de récolte.

7. Machine de récolte agricole selon au moins l'une des revendications précédentes, **caractérisée en ce que** le dispositif d'évaluation et de commande présente des moyens de commande afin de commander le dispositif de transbordement (10) lors du processus de pivotement du dispositif de transbordement (10) dans le sens inverse de la marche (FR) de la machine de récolte (3), de manière qu'un point d'impact réglé avant le pivotement du flux de produit de récolte sur le dispositif de transport (5) du véhicule de transport (4) reste sensiblement constant.

8. Machine de récolte agricole selon au moins l'une des revendications précédentes, **caractérisée en ce que**, dans une position de transbordement latérale (x₁) du dispositif de transbordement (10) au début d'une phase d'accélération de la machine de récolte (3) supérieure à une vitesse de marche de consigne de la machine de récolte, les signaux générés par le capteur pour la détermination de la vitesse de marche de la machine de récolte sont transmis au dispositif d'évaluation et de commande et le pivotement du dispositif de transbordement (10) dans le sens inverse de la marche (FR) est commandé en fonction des signaux transmis.

9. Machine de récolte agricole selon au moins l'une des revendications précédentes, **caractérisée en ce que** le processus de pivotement est arrêté lorsque le transport de produit de récolte est terminé.

10. Machine de récolte agricole selon au moins l'une des revendications précédentes, **caractérisée en ce que** le dispositif d'évaluation et de commande pour la commande du processus de pivotement du dispositif de transbordement (10) peut être activé par un dispositif à touche, et **en ce que** la commande activée peut être affichée au moyen d'un dispositif de signalisation optique et/ou acoustique dans la cabine de conduite (11) de la machine de récolte agricole (3).
